# EUROPEAN PATENT SPECIFICATION

(11) **EP 0 655 385 B1**
(45) Date of publication and mention of the grant of the patent: **23.10.1996**
(21) Application number: 93203288.1
(22) Date of filing: 25.11.1993
(51) Int. Cl.: B62J 9/00

(54) **Hook arrangement for a bicycle bag**
Hakenanordnung für eine Fahrradtasche
Dispositif d'accrochage pour une sacoche de vélo

(43) Date of publication of application: 31.05.1995
(73) Proprietor: HESLING PRODUCTS B.V., NL-5351 AB BERGHEM (NL)
(72) Inventor: Hesling, Fransiscus Johannes Sybrandus, NL-5351 AB Berghem (NL)
(74) Representative: Vollebregt, Cornelis Jacobus, Ir.

(56) References cited:
- EP-A- 0 396 183
- EP-A- 0 538 906
- NL-A- 6 512 498

## Description

The invention relates to a bicycle bag intended to be hung on the luggage carrier of a bicycle or the like, said bicycle bag being provided with two substantially Γ-shaped coupling hooks, which are each pivotally coupled, about an upwardly extending pivot pin, to a projecting part of a plate-shaped means extending along the rear side of the bicycle bag, in such a manner that the coupling hooks are pivotable between a position of rest, in which the coupling hooks are substantially parallel to the plate-shaped means, and a position of use, in which the coupling hooks are substantially perpendicular to the plate-shaped means.

A bicycle bag of this type is known from European Patent Publica-tion No. 396183.

This known construction is satisfactory per se; the object of the invention, however, is to bring about a further improvement on this known construction.

According to the invention this can be achieved in that a projecting part is at its bottom side provided with a recess for at least partially receiving a rod of a luggage carrier or the like, on which the bicycle bag may be hung.

By using this construction according to the invention the hooks may be relieved of forces which are exerted transversely to the rear side of the bag.

According to a further aspect of the invention such a bicycle bag to be hung on a luggage carrier by means of hooks is further provided with a securing means mounted on the rear side of the bicycle bag by means of a resilient coupling means, said securing means being shaped such that when the bicycle bag is hung on a rod of a luggage carrier, it can engage behind and under the respective rod of the luggage carrier.

As a result of this it is possible to obtain an extra protection of the bicycle bag not only from falling off the luggage carrier, but also from theft, since the bicycle bag can no longer be pulled off the bicycle by a random passer-by. Furthermore the bicycle bag is prevented from rattling while riding.

The invention will be explained in more detail hereafter with reference to an embodiment of the construction according to the invention diagrammatically illustrated in the accompanying Figures.

Figure 1 is a diagrammatic, perspective view of a bicycle bag according to the invention.

Figure 2 is an elevational view of a plate-shaped means incorporated in the rear wall of the bicycle bag, with coupling hooks attached thereto.

Figure 3 is a larger-scale side view of the plate-shaped means, with a coupling hook attached thereto.

Figure 4 is a larger-scale cross-sectional view of a part of the plate-shaped means, with a projecting part attached thereto.

Figure 5 is a perspective view of a securing means to be mounted on a bicycle bag.

Figure 6 is a diagrammatic side view of a part of a bicycle bag, with a securing means mounted thereon.

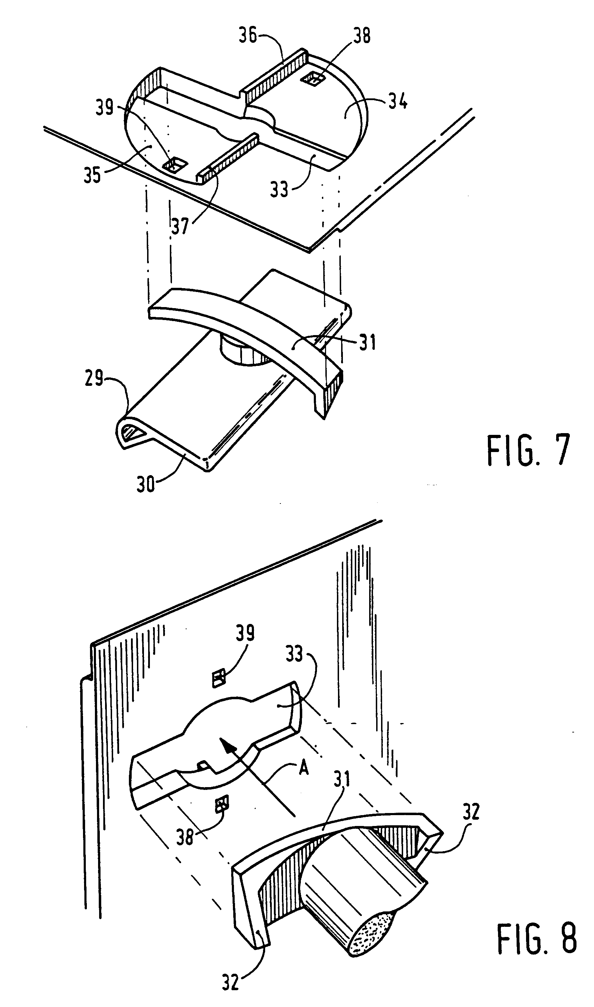

Figure 7 is a perspective view of a part of a plate-shaped means to be incorporated in a bicycle bag, showing spaced therefrom a connect-ing means used for attaching the securing means to the bicycle bag.

Figure 8 is a perspective view of the parts shown in Figure 7, seen from a direction other than in Figure 7.

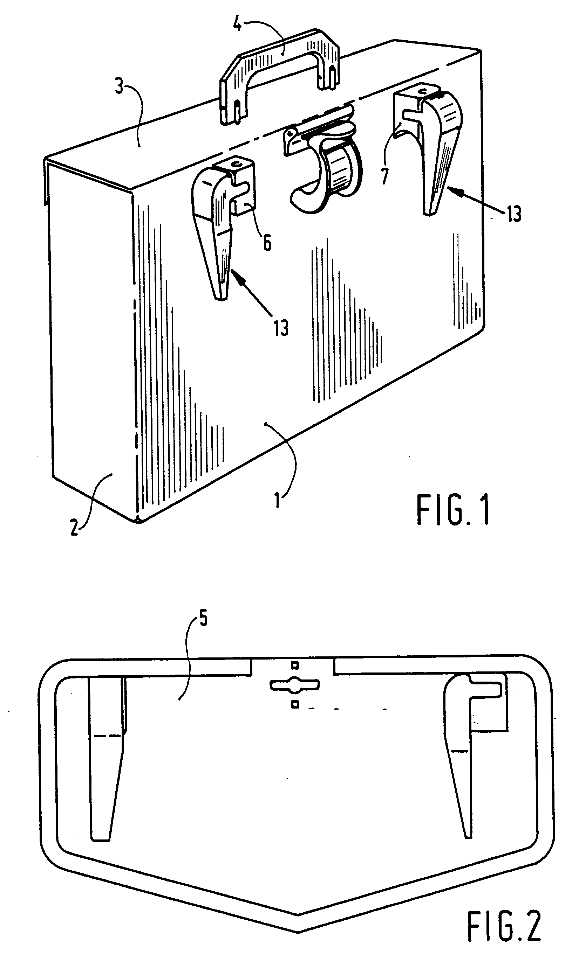

The bicycle bag shown in Figure 1 comprises a rear wall 1 and side walls 2 extending perpendicularly to said rear wall. Furthermore the bicycle bag is provided with a front wall extending parallel to the rear wall 1, as well as with a bottom. At its upper side the bicycle bag can be closed by means of a cover 3, to which a carrying handle is attached.

A plate-shaped means 5 is incorporated in the rear wall. Two projecting parts 6 and 7 are secured to said plate-shaped means, which parts project from the rear side of the bicycle bag, as will be apparent in particular from Figure 1.

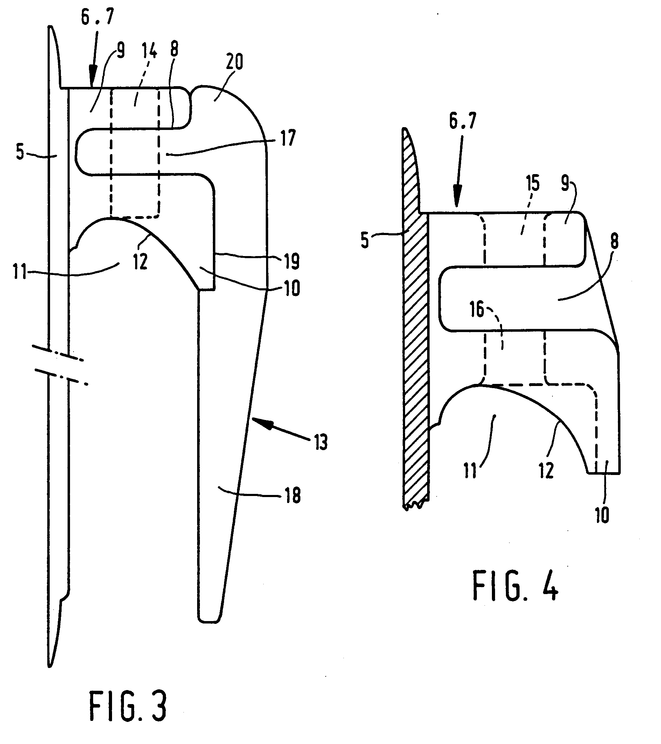

In said projecting parts slotted recesses 8 are provided, which extend at least substantially perpendicularly to the plate-shaped means 5, said slotted recesses being open at the sides of the projecting parts remote from the plate-shaped means 5 as well as at one side of each projecting part 6, 7. At its upper side said slotted hole 8 is bounded by an upper part 9 of the projecting part, whilst at its bottom side it is bounded by a part 10 of the respective projecting part, said bottom part 10 extending further from the plate-shaped means 5 than the upper part 9, as will be apparent in particular from Figures 3 and 4.

At its bottom side the bottom part 10 bounds a recess 11, which is open at its bottom side and which is bounded at its upper side by the curved boundary edge 12 of the bottom part 10 of the projecting parts 6 and 7, respectively.

A substantially Γ-shaped coupling hook 13 is coupled to each projecting part by means of a vertical hinge pin 14, which extends through holes 15 and 16, which are for that purpose provided in the projecting parts 6 and 7 respectively. The upper horizontal part 17 of the coupling hook is thereby located within a recess 8 of the respective projecting part 6 or 7. A recess 19 is provided in the vertical leg 18 of the coupling hook. In the position of use of the coupling hook shown in Figure 3, in which said coupling hook extends at least substantially perpendicularly to the plate-shaped means 5, the free end of the bottom part 10 of the projecting part is located within the recess 19, all this in such a manner, that the upper part of the coupling hook tightly embraces the bottom part 10 of the projecting part.

When the bag is carried by the handle 4, the hooks may be swung back against the rear wall of the bicycle bag, as is shown for the lefthand hook in Figure 1. In order to hang the bicycle bag on a rod of a luggage carrier or the like the hooks 13 are pivoted about the pins 14 to the position shown on the right in Figure 1 and in Figure 3, so that the vertical legs 18 of the bicycle bag can be hooked over a rod of a luggage carrier or the like.

The rod in question of the luggage carrier will thereby come to lie within the recesses 11 formed at the bottom side of the projecting parts 6 and 7.

This construction makes it possible to effect that any forces which are exerted on the bicycle bag in a direction transversely to the rod on which the bicycle bag is hung are first taken up by the ends of the parts of the bottom parts 10 of the projecting parts 6 and 7 bounding the recesses 11 located near the coupling hooks 13, so that these forces cannot be directly transmitted to the hooks 13.

Any forces which are still transmitted to the hooks 13 may be advantageously transferred to the respective projecting parts again. On the one hand this is possible because the horizontal leg 17 is retained in the recess 8 provided in a projecting part 6 or 7 and because the part of the vertical leg joining said horizontal leg 17 closely surrounds the bottom part 10 of the projecting part 6 or 7. Another factor which is conducive to the transfer of forces from the coupling hook 13 to a projecting part 6 or 7 is the fact that the hook is provided with a nose 20 projecting above the horizontal leg 17, which nose abuts against the end of the upper part 9 of the respective projecting part 6 or 7 in the position of use of the hook, as is apparent in particular from Figure 3.

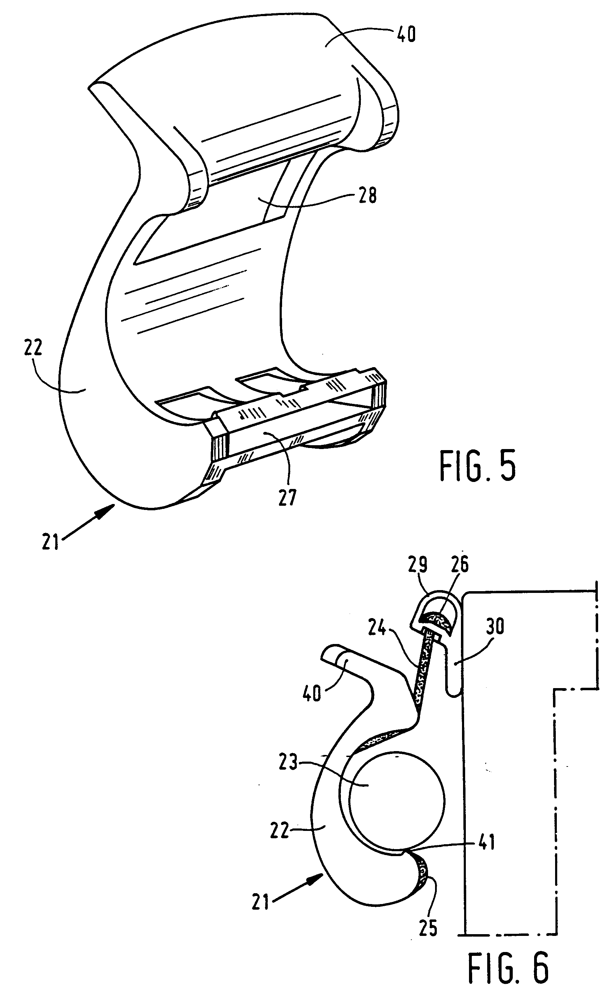

For additionally securing a bicycle bag hung on a rod of a luggage carrier or the like use may be made of the hook-shaped securing means 21 shown in Figures 5 and 6. Said securing means comprises a curved part 22, which is shaped in such a manner that it can surround a rod 23 of a luggage carrier or the like through more than 180°. A resilient coupling means 24 is coupled to said hook-shaped securing means. This resilient coupling means 24 is for example comprised of an elongated means made of rubber or the like elastic material, which is provided with thickenings 25 and 26 on both ends. The thickening 25 abuts against one end of the hook-shaped securing means 21 and is furthermore passed along the curved part 22 of said securing means, via passages 27 and 28 provided in the securing means for that purpose.

The thickening 26 is accommodated in the interior of a channel-shaped part 29 of an attachment plate 30. A bolt 31 is pivotally coupled to said attachment plate. The bolt is provided with projecting noses 32 at its opposite ends.

An elongated opening 33 is provided in the plate-shaped means 5 for securing the attachment plate to for example the plate-shaped means 5, whereby the central part of said opening is wider than the two ends. At the side of the plate-shaped means 5 directed towards the inner side of the bicycle bag two recesses 34 and 35 approximately in the shape of a quadrant are located on either side of the slot 33, each of said recesses being bounded at one end by ribs 36 and 37 respectively extending perpendicularly to the recess 33. Near said recesses 34 and 35 holes 38 and 39 respectively are furthermore provided in the plate-shaped means.

In order to secure the attachment plate to the bicycle bag the bolt 32 is passed through the hole 33 in the direction according to arrow A, seen in Figure 8. Then the bolt is turned through 90°, whereby the projecting noses 32 of the bolt will snap into the holes 38 and 39 at the end of the travel of the bolt, which is limited by the ribs 36 and 37. In this manner a solid fastening of the attachment plate 30 to the rear wall of the bicycle bag is ensured and thus the hook-shaped securing means 21 is coupled to the bicycle bag. When the bicycle bag is hung on the luggage carrier of a bicycle the hook-shaped means 21 may be hooked around the rod 23 of the luggage carrier or the like. In order to facilitate this the securing means is furthermore provided at its upper end with a projecting lip 40, by which the user may take hold of the securing means so as to hook the securing means around the rod 23 or the like.

In order to effect an adequate grip on the rod 23 or the like the securing means 21 may furthermore be provided with one or more tooth-shaped or blade-shaped projections 41 near its free end.

It will be apparent that a securing means of this type will prevent a bicycle bag hung on a luggage carrier or the like by means of hooks from springing up.

## Claims

1. A bicycle bag intended to be hung on the luggage carrier of a bicycle or the like, said bicycle bag being provided with two substantially Γ-shaped coupling hooks, which are each pivotally coupled, about an upwardly extending pivot pin, to a projecting part of a plate-shaped means extending along the rear side of the bicycle bag, in such a manner that the coupling hooks are pivotable between a position of rest, in which the coupling hooks are substantially parallel to the plate-shaped means, and a position of use, in which the coupling hooks are substantially perpendicular to the plate-shaped means, characterized in that a projecting part is at its bottom side provided with a recess for at least partially receiving a rod of a luggage carrier or the like, on which the bicycle bag may be hung.

2. A bicycle bag according to claim 1, characterized in that a horizontal leg of a coupling hook is accommodated in a slotted recess in a projecting part.

3. A bicycle bag according to claim 1 or 2, characterized in that near its junction with the horizontal leg the vertical leg of a coupling hook is provided with a recess for receiving one end of a projecting part in the position in which the respective hook extends at least substan-tially perpendicularly to the plate-shaped means.

4. A bicycle bag according to any one of the preceding claims, characterized in that the coupling hook is provided with a nose which projects above the horizontal leg of the coupling hook, which nose, in the position in which the coupling hook is substantially perpendicular to the plate-shaped means, abuts against one end of the projecting part supporting the respective coupling hook.

5. A bicycle bag according to any one of the preceding claims, characterized in that besides the hooks by which the bicycle bag can be hung on a luggage carrier or the like, a hook-shaped securing means is furthermore mounted on the rear side of the bicycle bag by means of a resilient coupling means, in such a manner, that when the bicycle bag is hung on a rod of a luggage carrier, said securing means can engage behind and under the respective rod of the luggage carrier.

6. A bicycle bag according to claim 5, characterized in that the end of the resilient coupling means remote from the hook-shaped securing means is coupled to an attachment piece, which is detachably connected to the bicycle bag.

7. A bicycle bag according to claim 5 or 6, characterized in that the securing means has a curved part, which is shaped in such a manner that said curved part can surround a rod of a luggage carrier or the like through more than 180°.

8. A bicycle bag according to any one of the claims 5 - 7, characterized in that one or more tooth-shaped projections are formed on the free end of the securing means.

9. A bicycle bag according to any one of the claims 5-8, characterized in that near the upper end of the securing means a project-ing lip for taking hold of the securing means is provided.

10. A bicycle bag according to any one of the claims 5 - 9, characterized in that said attachment means is a part made of a resilient material, which extends along the securing means from the bottom end of said securing means and which is connected to the bicycle bag with a part which projects above the securing means.

## Patentansprüche

1. Fahrradtasche, die an den Gepäckträger eines Fahrrads oder dergleichen gehängt wird, wobei die Fahrradtasche mit zwei im wesentlichen Γ-förmigen Kopplungshaken versehen ist, die um einen nach oben sich erstreckenden Schwenkzapfen an einem vorstehenden Teil einer plattenförmigen Einrichtung, die sich längs der Rückseite der Fahrradtasche erstreckt, in der Weise angelenkt sind, daß sie zwischen einer Ruheposition, in der die Kopplungshaken zur plattenförmigen Einrichtung im wesentlichen parallel sind, und einer Gebrauchsposition, in der die Kopplungshaken zur plattenförmigen Einrichtung im wesentlichen senkrecht sind, geschwenkt werden können, dadurch gekennzeichnet, daß ein vorstehendes Teil an seiner Unterseite mit einer Aussparung versehen ist, die eine Stange eines Gepäckträgers oder dergleichen, an die die Fahrradtasche gehängt werden kann, wenigstens teilweise aufnimmt.

2. Fahrradtasche nach Anspruch 1, dadurch gekennzeichnet, daß in einer geschlitzten Aussparung in einem vorstehenden Teil ein horizontaler Schenkel eines Kopplungshakens untergebracht ist.

3. Fahrradtasche nach Anspruch 1 oder 2, dadurch gekennzeichnet, daß der vertikale Schenkel eines Kopplungshakens in der Nähe seines Verbindungspunkts mit dem horizontalen Schenkel mit einer Aussparung versehen ist, die in der Position, in der sich der entsprechende Haken wenigstens im wesentlichen senkrecht zur plattenförmigen Einrichtung erstreckt, ein Ende eines vorstehenden Teils aufnimmt.

4. Fahrradtasche nach irgendeinem der vorangehenden Ansprüche, dadurch gekennzeichnet, daß der Kopplungshaken mit einer Nase versehen ist, die über den horizontalen Schenkel des Kopplungshakens vorsteht und die in der Position, in der der Kopplungshaken zur plattenförmigen Einrichtung im wesentlichen senkrecht ist, an einem Ende des vorstehenden Teils, das den entsprechenden Kopplungshaken unterstützt, anstößt.

5. Fahrradtasche nach irgendeinem der vorangehenden Ansprüche, dadurch gekennzeichnet, daß außer den Haken, mit denen die Fahrradtasche an einen Gepäckträger oder dergleichen gehängt werden kann, ferner eine hakenförmige Sicherheitseinrichtung an der Rückseite der Fahrradtasche mittels einer elastischen Verbindungseinrichtung angebracht ist, derart, daß bei an eine Stange des Gepäckträgers gehängter Fahrradtasche die Sicherheitseinrichtung hinter und unter der entsprechenden Stange des Gepäckträgers in Eingriff sein kann.

6. Fahrradtasche nach Anspruch 5, dadurch gekennzeichnet, daß das von der hakenförmigen Sicherheitseinrichtung entfernte Ende der elastischen Verbindungseinrichtung mit einem Befestigungsteil verbunden ist, das mit der Fahrradtasche lösbar verbunden ist.

7. Fahrradtasche nach Anspruch 5 oder 6, dadurch gekennzeichnet, daß die Sicherheitseinrichtung einen gekrümmten Teil aufweist, der so geformt ist, daß er eine Stange eines Gepäckträgers oder dergleichen über mehr als 180° umgeben kann.

8. Fahrradtasche nach irgendeinem der Ansprüche 5-7, dadurch gekennzeichnet, daß am freien Ende der Sicherheitseinrichtung ein oder mehrere zahnförmige Vorsprünge ausgebildet sind.

9. Fahrradtasche nach irgendeinem der Ansprüche 5-8, dadurch gekennzeichnet, daß in der Nähe des oberen Endes der Sicherheitseinrichtung eine vorstehende Lippe vorgesehen ist, an der die Sicherheitseinrichtung gehalten werden kann.

10. Fahrradtasche nach irgendeinem der Ansprüche 5-9, dadurch gekennzeichnet, daß die Befestigungseinrichtung ein Teil ist, das aus elastischem Material hergestellt ist und sich längs der Sicherheitseinrichtung von deren Unterseite erstreckt und mit der Fahrradtasche über ein Teil verbunden ist, das über die Sicherheitseinrichtung vorsteht.

## Revendications

1. Sacoche de bicyclette destinée à être accrochée au porte-bagages d'une bicyclette ou analogue, cette sacoche de bicyclette étant munie de deux crochets d'accouplement sensiblement en forme de Γ, qui sont chacun couplés par pivot, au voisinage d'une broche de pivot s'étendant vers le haut, à une partie faisant saillie de moyens en forme de plaque s'étendant le long du côté arrière de la sachoche de bicyclette, d'une manière telle que les crochets d'accouplement puissent pivoter entre une position de repos, dans laquelle les crochets d'accouplement sont sensiblement parallèles aux moyens en forme de plaque, et une position d'utilisation, dans laquelle les crochets d'accouplement sont sensiblement perpendiculaires aux moyens en forme de plaque, caractérisée en ce qu'une partie en saillie est munie à son côté inférieur d'un évidement destiné à recevoir au moins partiellement une tige d'un porte-bagages ou analogue, sur laquelle la sacoche de bicyclette peut être accrochée.

2. Sacoche de bicyclette suivant la revendication 1, caractérisée en ce qu'un bras horizontal du crochet d'accouplement est reçu dans un évidement en forme de fente d'une partie en saillie.

3. Sacoche de bicyclette suivant la revendication 1 ou 2, caractérisée en ce qu'à proximité de sa jonction au bras horizontal, le bras vertical d'un crochet d'accouplement est muni d'un évidement destiné à recevoir une extrémité d'une partie en saillie dans la position dans laquelle le crochet respectif s'étend au moins sensiblement perpendiculairement aux moyens en forme de plaque.

4. Sacoche de bicyclette suivant l'une quelconque des revendications précédentes, caractérisée en ce que le crochet d'accouplement est muni d'un nez qui fait saillie au-delà du bras horizontal du crochet d'accouplement, ce nez, dans la position dans laquelle le crochet d'accouplement est sensiblement perpendiculaire au moyen en forme de plaque, venant buter contre une extrémité de la partie en saillie qui supporte le crochet d'accouplement respectif.

5. Sacoche de bicyclette suivant l'une quelconque des revendications précédentes, caractérisée en ce que outre le crochet par lequel la sacoche de bicyclette peut être accrochée sur un porte-bagages ou analogue, des moyens de sûreté en forme de crochet sont montés sur le côté arrière de la sacoche de bicyclette au moyen de moyens d'accouplement élastiques, d'une manière telle que lorsque la sacoche de bicyclette est accrochée sur une tige du porte-bagages, ces moyens de sûreté peuvent s'engager derrière et en dessous de la tige respective du porte-bagages.

6. Sacoche de bicyclette suivant la revendication 5, caractérisée en ce que l'extrémité des moyens d'accouplement élastiques éloignée des moyens de sûreté en forme de crochet est couplée à une pièce de fixation, qui est reliée de manière à pouvoir être détachée à la sacoche de bicyclette.

7. Sacoche de bicyclette suivant la revendication 5 ou 6, caractérisée en ce que les moyens de sûreté comportent une partie incurvée, qui a une forme telle que cette partie incurvée peut entourer une tige d'un porte-bagages ou analogue sur plus de 180°.

8. Sacoche de bicyclette suivant l'une des revendications 5 à 7, caractérisée en ce que l'une ou plusieurs projections en forme de dent sont formées sur l'extrémité libre des moyens de sûreté.

9. Sacoche de bicyclette suivant l'une des revendications 5 à 8, caractérisée en ce qu'à proximité de l'extrémité supérieure des moyens de sûreté, il est prévu une lèvre faisant saillie destinée à maintenir les moyens de sûreté.

10. Sacoche de bicyclette suivant l'une des revendications 5 à 9, caractérisée en ce que les moyens de fixation sont une partie réalisée en un matériau élastique, qui s'étend le long des moyens de sûreté de l'extrémité inférieure des moyens de sûreté et qui est reliée à la sacoche de bicyclette par une partie qui fait saillie au-delà des moyens de sûreté.
